# EUROPEAN PATENT APPLICATION

(11) **EP 4 060 301 A1**
(43) Date of publication of application: **21.09.2022**
(21) Application number: 20888438.7
(22) Date of filing: 11.11.2020
(51) Int. Cl.: G01K 7/26, G01K 1/02, G01N 21/75

(54) **TEMPERATURE-CHANGE SENSING SUBSTRATE COMPRISING SELF-HEALING POLYURETHANE POLYMER**

(30) Priority: 11.11.2019 KR 20190143606; 10.11.2020 KR 20200149363
(71) Applicant: Korea Research Institute of Chemical Technology, Daejeon 34114 (KR)
(72) Inventor: PARK, Jeyoung, Daejeon 34114 (KR); HWANG, Sung Yeon, Daejeon 34114 (KR); OH, Dong Yeop, Daejeon 34114 (KR); CHOI, Sejin, Daejeon 34114 (KR); KIM, Seon Mi, Daejeon 34114 (KR)
(74) Representative: Müller-Boré & Partner Patentanwälte PartG mbB
(86) International application number: PCT/KR2020/015772
(87) International publication number: WO 2021/096215

(57) **Abstract**

The present invention relates to a temperature-change sensing substrate comprising a self-healing polyurethane polymer. More specifically, the present invention relates to a temperature-change sensing substrate having a self-healing polyurethane polymer matrix and a plurality of pores dispersed in the matrix. The temperature-change sensing substrate according to the present invention can be applied as a temperature-change sensor for preventing the spoiling of refrigerated or frozen food and medical supplies. For example, substrate, which was opaque when stored at -60°C, -50°C, -30°C, -20°C, -10°C and the like, becomes transparent if the temperature rises to 0°C, 10°C, 20°C, 30°C and the like, and thus a temperature-change sensor capable of checking storage conditions through a change in light transmittance can be provided.

## Description

### [Technical Field]

The present invention relates to a temperature-change sensing substrate including a self-healing polyurethane polymer. More specifically, the present invention relates to a temperature-change sensing substrate having a self-healing polyurethane polymer matrix and pores dispersed in the matrix.

### [Background Art]

Perishable food or deformable medicines require a firm guarantee for freezing or refrigerating storage that meets specifications from production to delivery to consumers.

In general, a temperature range at which food or medicines are prone to spoilage is 10°C to 60°C, which stimulates the growth of spoilage microorganisms (E. coli, salmonella, norovirus, etc.). Completely spoiled food may be easily identified by changes by all senses, including touch, sight, smell, and taste, but food in the process of spoilage is dangerous because it is difficult for individuals to intuitively detect.

Therefore, a time temperature indicator (TTI) has been developed that allows consumers to easily recognize whether there is spoilage or deformation occurring in the supply process of food or medicines.

Typically, there are two types of these technologies.

The first is a diffusion-based TTI, which operates on the principle of measuring temperature and time while a dye (temperature sensing part) whose a phase change occurs with temperature passes through a porous material. However, the diffusion-based TTI has low temperature sensitivity, and becomes bulky and has a limited structure as the temperature sensing part and a display part are combined and modularized, thereby increasing production cost due to a somewhat complicated manufacturing process. In addition, the diffusion-based TTI is vulnerable to external impact and has low flexibility.

The second is a chemical reaction-activation TTI, which operates on the principle of using a phenomenon in which the color changes due to enzymes, catalysts, chemical reactions or the like above a certain temperature. However, the chemical reaction-activation TTI has a disadvantage in that it is likely to be affected not only by a change in temperature but also by humidity or type of food, and may cause consumers' rejection because monomolecular compounds are used.

Therefore, there is a high demand for an innovative TTI candidate material that may compensate for the disadvantages of the conventional TTI described above, and there is a need for development of a new temperature sensing material that may detect a change in temperature in a self-responsive manner, shows an irreversible visual change effect, reassures consumers, is flexible, and is not affected by external factors such as humidity or compounds because monomolecular compounds are not used.

### [Disclosure]

### [Technical Problem]

An object of the present invention is to provide a temperature-change sensing substrate that may be applied as a temperature-change sensing sensor for preventing spoilage of refrigerated or frozen food and medical supplies.

Specifically, an object of the present invention is to provide a temperature-change sensing substrate capable of detecting a change in temperature, which is opaque at a low temperature because the self-healing effect is controlled, but causes a change in light transmittance as the temperature rises, for example, as the polymer migrates and self-fuses through self-healing when stored at a temperature above room temperature.

Specifically, an object of the present invention is to provide a temperature-change sensing substrate capable of checking storage states through a change in light transmittance as the substrate, which was opaque when stored at -60°C, -50°C, -30°C, -20°C, -10°C, and the like, becomes transparent if the temperature rises to 0°C, 10°C, 20°C, 30°C and the like.

That is, an object of the present invention is to provide a temperature-change sensing substrate capable of checking a storage state such as whether food or medical supplies are stored at a normal temperature or at an abnormal temperature by observing the storage state with the naked eyes or mechanically due to a change in light transmittance depending on the storage temperature.

Another object of the present invention is to provide a temperature-change sensing substrate including a self-healing polyurethane polymer and having an onset point temperature at which the self-healing polyurethane polymer starts to self-fuse, and irreversibly self-fuses to each other at the onset point, thereby increasing transparency.

Further another object of the present invention is to provide a temperature sensor using the temperature-change sensing substrate.

### [Technical Solution]

The inventors of the present invention have completed the present invention by finding that when a substrate includes a self-healing polyurethane polymer matrix and pores dispersed in the matrix, more specifically, a light-scattering pore structure, the change in light transmittance occurs as the opaque substrate self-fuses depending on a change in temperature due to the light-scattering pore structure, and the change in temperature may be detected from the change in light transmittance, as a result of performing studies in order to solve the above problem.

In one general aspect, there is provided a temperature-change sensing substrate having a self-healing polyurethane polymer matrix and pores dispersed in the matrix,

wherein a change in light transmittance occurs while sizes of the pores are changed due to diffusion of the self-healing polyurethane polymer forming the matrix by a change in temperature, such that the change in temperature is detected.

More specifically, the self-healing polyurethane polymer forming the matrix is diffused by a change in temperature, such that the sizes of the pores decrease or pores disappear while the self-healing polyurethane polymer self-fuses, and thus, the self-healing polyurethane polymer may change into a homogeneous film. Accordingly, a change in light transmittance occurs, such that the change in temperature may be detected.

The temperature-change sensing substrate may have a change in light transmittance while the size of the pores decreases or pores disappears as the temperature rises.

The pores may be selected from through-holes and irregularities.

The temperature-change sensing substrate may have an onset point temperature at which the self-healing polyurethane polymer starts to self-fuse, and irreversibly self-fuses at the onset point temperature to increase transparency.

When the temperature-change sensing substrate is maintained at -20°C for 24 hours, and then the light transmittance measured at a wavelength of 380 to 780 nm is referred to as TT₁, and when the temperature-change sensing substrate is maintained at 20°C for 24 hours, and then the light transmittance measured at a wavelength of 380 to 780 nm is referred to as TT₂, |TT₂ - TT₁| ≥ 5%.

The temperature-change sensing substrate may have a light transmittance of 15% or more measured at a wavelength of 380 to 780 nm after being maintained at 20°C for 24 hours.

The temperature-change sensing substrate may be:
a) a web-film in which microfibers made of a self-healing polyurethane polymer form network structures, and through-holes are formed in the network structures, or
b) a sheet or film made of a self-healing polyurethane polymer, and has a plurality of through-holes or irregularities.

The microfibers have an average diameter of 0.01 µm to 200 µm. The microfibers may be manufactured by electrospinning, solution spinning, or melt spinning.

The size of the through-hole may be 0.01 µm to 200 µm.

The self-healing polyurethane polymer may include a disulfide structure.

The temperature-change sensing substrate may have a thickness of 1 µm to 500 µm.

In another general aspect, there is provided a temperature sensor including the temperature-change sensing substrate as described above. The temperature sensor may be a temperature-change sensor for checking the storage temperature of refrigerated food, frozen food, medical supplies, medicines and the like, but the present invention is not limited thereto. That is, it is possible to provide a temperature sensor capable of checking the storage state due to an irreversible change in the light transmittance depending on the temperature.

In another general aspect, there is provided a packaging material including the temperature sensor as described above. In this case, the packaging material may be used for packaging food, medicines, and the like, but the present invention is not limited thereto. The packaging material may be particularly useful as a packaging material for food and medicines, which may be spoiled or deformed depending on the storage temperature.

### [Advantageous Effects]

The temperature-change sensing substrate according to the present invention may check the storage state due to an irreversible change in the light transmittance depending on the temperature, and accordingly, may be applied as a temperature sensor that may recognize the storage conditions of livestock products, seafood, medicines, etc., which may be spoiled or deformed depending on the storage temperature.

The temperature-change sensing substrate according to the present invention is different from light transmittance in a refrigerated or frozen state and that at room temperature or more, and therefore the storage states be checked with the naked eye. Specifically, for example, the temperature-change sensing substrate is opaque due to the light-scattering pore structure at a temperature of -60°C, -50°C, -30°C, -20°C, -10°C and the like, and irreversibly self-fuses at the onset point temperature at which the self-healing polyurethane polymer starts to self-fuse as the temperature rises to 0°C, 10°C, 20, 30°C and the like, and thus transparency increases. Specifically, the temperature-change sensing substrate has a transmittance of 10% or less, preferably 5% or less, more preferably 1% or less at -20°C. In addition, the temperature-change sensing substrate may have a transmittance of 15% or more, preferably 17% or more, and more preferably 20% or more at 20°C.

The temperature-change sensing substrate according to the present invention may be manufactured in various forms such as a film, a sheet, a fiber-web, a woven fabric, a knitted fabric, or a non-woven fabric. More specifically, the microfibers are manufactured by methods such as electrospinning, solution spinning, or melt spinning, and the microfibers form a network structure to form a plurality of pores, thereby making it possible to manufacture in a simpler way.

The temperature sensor according to the present invention may provide a temperature sensor operable at a temperature in the range of -60°C to 30°C, and a temperature sensor in which light transmittance is changed by 5% or more, 10% or more, and preferably 20% or more by self-healing of the polymer depending on a change in temperature may be provided.

### [Description of Drawings]

FIG. 1 is a schematic diagram of an electrospinning process according to an aspect of the present invention and an aspect of manufacturing a temperature sensor using an electrospun web-film.

FIG. 2 is a photograph observed with the naked eye over time when a microfiber-based web-film (a freezing-dedicated temperature-change sensor) of Example 3 according to the present invention is exposed to 20°C.

### [Best Mode]

Hereinafter, the present invention will be described in more detail. The following specific examples and Examples are only a reference for describing the present invention in detail, and the present invention is not limited thereto, and may be implemented in various forms.

In addition, all technical terms and scientific terms have the same meanings as those commonly understood by a person skilled in the art to which the present invention pertains unless otherwise defined. The terms used in the description of the present invention are only for effectively describing certain embodiments, and are not intended to limit the present invention.

In addition, singular forms used in the detailed description and the claims are intended to include the plural forms unless otherwise indicated in context.

Unless explicitly described to the contrary, "including" any component will be understood to imply the inclusion of other components rather than the exclusion of other components.

In the present invention, the substrate includes the form of a film, a sheet, a fiber-web (web-film), a woven fabric, a knitted fabric, or a non-woven fabric.

In the present invention, a "pore" has the same meaning as a "light scattering pore structure", and may be a through-hole formed by a network structure between a plurality of microfibers when a fiber-web is formed, or may be formed as a through-hole is formed on the substrate in the case of a film or sheet-like substrate.

In the present invention, an "onset point" refers to a "critical temperature" at which self-healing polyurethane may start self-healing, and self-healing does not occur below the onset point, and self-healing may be triggered only above the onset point. Accordingly, the "onset point" and the "critical temperature" are used interchangeably in this specification.

In an aspect of the present invention, the self-healing polyurethane polymer satisfies both excellent self-healing and high light transmittance at room temperature, and thus has excellent applicability as a temperature-change sensor to prevent spoilage of refrigerated or frozen food, medicines, etc. that may be spoiled depending on a temperature.

For application of the temperature-change sensor, a temperature-change sensing substrate using a self-healing polyurethane polymer has a plurality of pores and is opaque at a low temperature, but has an increased transparency by the self-healing of the self-healing polyurethane polymer at high temperatures above the critical temperature. Thus, it may be desirable for the temperature-change sensing substrate to have a characteristic having a certain level of transparency or more.

As a specific example, when the self-healing polyurethane polymer is formed into a film to form a dense film, the change in light transmittance depending on a change in temperature may be insignificant due to the high transparency of the polymer material. In order to maximize the change in light transmittance, it may be desirable for the temperature-change sensing substrate to have properties of having transparency of a certain level or higher due to a reduced light scattering at a high temperature above the critical temperature although the substrate is opaque at a low temperature because light scattering of incident light is generated in the film.

In order to implement change properties in transparency as described above, the temperature-change sensing substrate including the self-healing polyurethane polymer is not densified, and a non-uniform self-healing polyurethane substrate or a porous self-healing polyurethane substrate containing pores or irregularities therein or on a surface thereof may be used as a preferable temperature-change sensor.

The shape and size of the pores or irregularities are sufficient as long as it can generate light scattering of light incident on the substrate in the visible light region (380-780 nm), and are not limited to a specific shape or size within a specific range. For example, the pores or irregularities may have an average diameter of 10 nm to 500 µm, 0.01 µm to 200 µm, or 0.1 µm to 100 µm. The pore is a meaning including a through-hole. That is, when the temperature-change sensing substrate is in the form of a film or sheet, the pores may be formed in the substrate so as to have the through-holes.

When the pores are included in the substrate, the porosity of the substrate may be 10 to 95%, specifically 20 to 85%, and more specifically 40 to 80%.

The shape of the substrate is not limited to a specific shape, and specifically includes, for example, the form of a film, a sheet, a fiber-web (web-film), a woven fabric, a knitted fabric, or a non-woven fabric.

More specifically, in an aspect of the present invention, the temperature-change sensing substrate may be a fiber-web (or referred to as a web-film) in which self-healing polyurethane polymer microfibers form network structures, and through-holes are formed in the network structures. The microfibers may have an average diameter of 0.01 µm to 200 µm, but the present invention is not limited thereto. Specifically, for example, the microfibers may be manufactured by electrospinning, solution spinning, or melt spinning. The size of the through-hole may be 0.01 µm to 200 µm, but the present invention is not limited thereto.

Another aspect may be a self-healing polyurethane polymer sheet or film having a plurality of through-holes. The size of the through-hole may be 0.01 µm to 200 µm, but the present invention is not limited thereto.

In an aspect of the present invention, there is provided a self-healing web-film, wherein the self-healing web-film includes a self-healing polyurethane polymer. Specifically, the self-healing polyurethane polymer may be molded into microfibers, and a plurality of microfibers composed of the self-healing polyurethane polymer may be manufactured into a self-healing web-film in which a network structure is formed. The self-healing web-film may include a plurality of through-hole-shaped pores in the network structure as the microfibers form a network structure, or may include irregularities on the surface thereof.

More specifically, the self-healing web-film is made of a non-woven fabric in which the self-healing polyurethane polymer is microfibrilated and aggregated, and has opaque properties in a web state. However, at a temperature higher than the critical temperature, the microfibers lose their fibrous shape, and the self-healing polyurethane polymer migrates to the surrounding pores to fill the empty space (or referred to as pores) of the web and change into a homogeneous and dense film.

The microfibrillation of the self-healing polyurethane polymer may be achieved by solution spinning or melt spinning.

In the case of the solution spinning, there are various spinning methods such as dry spinning, wet spinning, and electrospinning. However, in the case of the electrospinning, it is preferable because the diameter of the fiber may be easily adjusted from a nanometer level (~10² nm) to a micrometer level (~10² µm).

Accordingly, the present invention provides a method for manufacturing a self-healing web-film by an electrospinning method. Specifically, a method for manufacturing a self-healing web-film includes: S1) dissolving the self-healing polyurethane polymer in an organic solvent to prepare a self-healing polyurethane solution; S2) electrospinning the self-healing polyurethane solution to form microfibers; and S3) obtaining a web-film made of the microfibers.

The electrospinning may be performed using spinning equipment including a nozzle part for discharging a polyurethane polymer solution or melt for electrospinning, a high voltage generator, and a collector. The electrospinning may also be a method in which microfibrillated aggregates having a random structure are implemented by the strength of an electric field applied to the discharge.

The concentration of a polymer solution for electrospinning is not particularly limited as long as the electrospinning is possible. In addition, in constituting the polymer solution, the solvent may be used without limitation as long as it is a solvent capable of dissolving the polymer and capable of electrospinning.

According to an aspect of the present invention, the electrospinning may be electrospun on a coagulation bath.

The coagulation bath may include water, and a collector may be included in the coagulation bath to be electrospun on the water surface. As the coagulation bath includes water, the solvent contained in the polymer solution is preferably a solvent miscible with water, and water may be a poor solvent for the polymer.

In addition, during electrospinning, the collector is included in the coagulation bath, and thus the self-healing polyurethane polymer microfibers are spun on the water surface of the coagulation bath, thereby easily obtaining a self-healing web-film in the form of pure non-woven fabric in which impurities and solvents do not remain.

The self-healing web-film manufactured by the electrospinning may have a very dense nonwoven structure by bonding microfibers having a diameter of a nanometer level (~10² nm) to a micrometer level (~10² µm). Specifically, the microfibers may have an average diameter of 0.01 µm to 200 µm, preferably 0.05 µm to 100 µm, and more preferably 0.1 µm to 50 µm.

In addition, the self-healing web-film manufactured by the electrospinning may have a thickness of 0.1 µm to 500 µm, preferably 0.1 µm to 200 µm, more preferably 0.5 µm to 150 µm, and still more preferably 1 µm to 100 µm.

The electrospinning may be a method of implementing microfibrillated aggregates having a random structure due to the strength of an electric field applied to the discharge by using a spinning equipment including a nozzle part for discharging a polyurethane polymer solution or melt for electrospinning, a high voltage generator, and a collector. The concentration of a polymer solution for electrospinning is not particularly limited as long as the electrospinning is possible. In addition, in forming the polymer solution, a complex solvent may be used as the solvent, but the present invention is not limited thereto.

As the self-healing web-film includes the microfibers of the average diameter and forms a network structure, the difference in light transmittance depending on a change in temperature in a visible region may be clearly observed with the naked eye, and the self-healing web-film durability may be increased.

Since the self-healing web-film has such a non-woven structure, in the web state, incident light is light-scattered through the network structure formed by the microfibers, and thus the self-healing web-film has opaque properties. However, at a temperature higher than the critical temperature, the microfibers lose their fibrous shape, and the self-healing polyurethane polymer migrates to the surrounding pores to fill the empty space of the web and change into a homogeneous and dense film. According to this behavior, the self-healing web-film may have a high light transmittance at a high temperature greater than or equal to the critical temperature.

The self-healing web-film may have a light transmittance of 25% or less at a wavelength of 380 to 780 nm at a temperature of less than or equal to the onset point, preferably 15% or less, and more preferably 10% or less.

The self-healing web-film may have an onset point at a temperature of 10°C or more. At a temperature greater than or equal to the onset point, the microfibers are irreversibly self-fuse to each other, thereby increasing transparency. This means that the transparency increases as the self-healing web-film maintains the non-woven form at a temperature of less than or equal to the onset point, but is converted from the nonwoven form to the film form at a temperature of 10°C or more.

Specifically, the onset point may be 15°C or more, specifically 20°C or more, and may be, but is not limited to, 30°C or less, but the range is not limited to a specific numerical range because it corresponds to a design variable that may vary according to application examples.

As an aspect, the light transmittance measured at a wavelength of 380 to 780 nm may be 15% or more after maintaining the self-healing web-film at 20°C for 24 hours. In addition, when the self-healing web-film is maintained at -20°C for 24 hours, and then the light transmittance measured at a wavelength of 380 to 780 nm is referred to as TT₁, and the self-healing web-film is maintained at 20°C for 24 hours, and then the light transmittance measured at a wavelength of 380 to 780 is referred to as TT₂, |TT₂ - TT₁| ≥ 5%. More specifically, |TT₂ - TT₁| may be, but is not limited to, 5% or more, 6% or more, 7% or more, 8% or more, 9% or more, and 10% or more, and it may be more suitable for visual identification in the above range.

For example, when storing and distributing temperature-sensitive meat and fish, there is a risk of loss of freshness and deterioration due to temperature rise. Accordingly, when a self-healing web-film having an onset point of 10°C is used as a temperature sensor, it can be trusted that the freshness is constantly maintained during storage and distribution if the web-film maintains opacity. On the other hand, if the web-film has transparency, it means that it has been maintained at a temperature of 10°C or more for a certain period of time during storage and distribution, and thus it is possible to provide usefulness for consumers to easily determine freshness of the product just by checking the transparency of the product with the naked eyes. Accordingly, the temperature sensor including the self-healing web-film according to the present invention may be an irreversible temperature sensor.

The web-film, for example, has a transmittance of 10% or less, preferably 5% or less, and more preferably 1% or less at -20°C. In addition, the web-film may have a transmittance of 15% or more, preferably 17% or more, and more preferably 20% or more at 20°C. The upper limit is not particularly limited, but may be 15% to 40%.

### [Self-healing polyurethane polymer]

In an aspect of the present invention, the self-healing polyurethane polymer for producing the temperature-change sensing substrate may include a disulfide structure. More specifically, the self-healing polyurethane polymer may be a polyurethane-based polymer polymerized including aromatic disulfide. By introducing an aromatic disulfide group (-Ar-S-S-Ar-) into the chemical structure, self-recovery is possible at room temperature without additional heat treatment or light irradiation. In this case, the room temperature may mean 10 to 45°C, more specifically 20 to 30°C.

More specifically, the self-healing polyurethane polymer may be polymerized from a composition including an aromatic disulfide diol, an alicyclic polyisocyanate, and a polyol. In addition to the alicyclic polyisocyanate, any one or two or more selected from an aliphatic polyisocyanate and an aromatic polyisocyanate may be further included.

The aromatic disulfide diol may be represented by the following Formula 1:

[Formula 1] HO-Ar₁-S-S-Ar₂-OH

wherein Ar₁ and Ar₂ are each independently a substituted or unsubstituted arylene group having 6 to 30 carbon atoms.

In the aromatic disulfide diol represented by Formula 1, Ar₁ and Ar₂ may be each independently a substituted or unsubstituted arylene group having 6 to 18 carbon atoms, and more specifically, may be any one selected from a substituted or unsubstituted phenylene group, biphenylene group, naphthylene group, terphenylene group, anthrylene group, phenanthrylene group, phenalenylene group, tetraphenylene group, pyrenylene group and the like. Herein, "substitution" and "substituted" mean that one or more hydrogen atoms in the functional groups of Ar₁ and/or Ar₂ are substituted with one or more substituents selected from the group consisting of a halogen atom (-F, - Cl, -Br, or -I), an alkyl group having 1 to 10 carbon atoms, an alkoxy group having 1 to 10 carbon atoms, a halogenated alkyl group having 1 to 10 carbon atoms, a cycloalkyl group having 3 to 30 carbon atoms, a hydroxyl group, an amine group, a carboxylic acid group, and an aldehyde group, provided that 6 to 30 carbon atoms of the arylene group described in Formula 1 does not include the carbon number of the substituent.

As such, by preparing a polyurethane-based polymer using an aromatic disulfide diol with a terminal group OH, an improved self-healing rate may be secured and a polymer having high transparency may be prepared, and thus a clearer view may be secured.

Also, in addition to an aromatic disulfide diol with a terminal group -OH, an S group-containing compound having an aromatic thiol group or an aromatic disulfide group with a terminal group -SH may be used as a monomer.

Specifically, compounds such as 4-mercaptophenol, 4-aminobenzenethiol, benzene-1,4-dithiol, bis(4-hydroxyphenyl)disulfide, 4,4'-dithiodianiline may be exemplified, but the present invention is not particularly limited thereto.

The alicyclic polyisocyanate may be used without particular limitation as long as it is an alicyclic compound having two or more isocyanate groups. Specifically, isophorone diisocyanate (IPDI), 4,4'-dicyclohexylmethane diisocyanate (hydrogenated MDI), cyclohexylene diisocyanate, methylcyclohexylene diisocyanate (hydrogenated TDI), bis(2-isocyanatoethyl)-4-dichlorohexene-1,2-dicarboxylate, 2,5-norbornane diisocyanate, and 2,6-norbornane diisocyanate may be exemplified, but are not limited thereto.

In addition to the alicyclic polyisocyanate, any one or two or more selected from an aliphatic polyisocyanate and an aromatic polyisocyanate may be further included. The aliphatic polyisocyanate may be used without particular limitation as long as it is commonly used in the art. Specifically, any one or two or more selected from ethylene diisocyanate, tetramethylene diisocyanate, hexamethylene diisocyanate (HDI), dodecamethylene diisocyanate, 1,6,11-undecanetriisocyanate, 2,2,4-trimethylhexamethylene diisocyanate, lysine diisocyanate, 2,6-diisocyanatomethylcaproate, bis (2-isocyanatoethyl) fumarate, bis(2-isocyanatoethyl)carbonate, and 2-isocyanatoethyl-2,6-diisocyanatohexanoate may be exemplified.

The aromatic polyisocyanate may also be used without particular limitation as long as it is commonly used in the art. Specifically, any one or two or more selected from 1,3-phenylenediisocyanate, 1,4-phenylenediisocyanate, 2,4-tolylene diisocyanate (TDI), 2,6-tolylene diisocyanate, 4,4'-diphenylmethane diisocyanate (MDI), 2,4-diphenylmethane diisocyanate, 4,4'-diisocyanatobiphenyl, 3,3'-dimethyl-4,4'-diisocyanatobiphenyl, 3,3'-dimethyl-4,4'-diisocyanatodiphenylmethane, 1,5-naphthylene diisocyanate, 4,4',4"-triphenylmethane triisocyanate, m-isocyanatophenylsulfonylisocyanate, and p-isocyanatophenylsulfonylisocyanate may be exemplified.

The polyol may be used without particular limitation as long as it is commonly used in the art, and specifically, one or more high molecular weight polyols selected from the group consisting of polyether polyols, polycarbonate polyols, and polyester polyols may be exemplified.

The high molecular weight polyol may have a number average molecular weight of 500 to 20,000 g/mol, and more preferably, the high molecular weight polyol may be a compound having a number average molecular weight of 800 to 10,000 g/mol, and further preferably, a compound having a number average molecular weight of 900 to 5,000 g/mol.

In order for the self-healing polyurethane-based polymer to be self-restored at room temperature, it is preferable to appropriately adjust the ratio between a hydroxyl group-containing compound and an isocyanate group-containing compound. Specifically, for example, a molar ratio of the hydroxyl group of the hydroxyl group-containing compound to the isocyanate group of the isocyanate group-containing compound may be 1:0.8 to 1.2, and more preferably 1:0.9 to 1.1. In the above range, the self-healing polyurethane-based polymer may be effectively polymerized, and when the polymer is damaged, self-recovery at room temperature may be possible.

The self-healing polyurethane-based polymer according to the present invention includes an aromatic disulfide group, thereby enabling self-recovery at room temperature without additional heat treatment or light irradiation by disulfide metathesis of the disulfide group.

The self-healing polyurethane polymer may have a weight average molecular weight of 5,000 to 1,000,000 g/mol, preferably 10,000 to 500,000 g/mol, and more preferably 20,000 to 300,000 g/mol, but the present invention is not limited thereto.

### [Temperature sensor]

In the temperature sensor according to an aspect of the present invention, a change in light transmittance may occur irreversibly at an onset point temperature, such that a change in temperature-change may be sensed. Accordingly, when the products to be stored in a frozen or refrigerated state are incorrectly stored or exposed at room temperature, the temperature sensor may detect it.

In an aspect, the temperature sensor may be made of the temperature-change sensing substrate itself according to the above-described aspect, or may be one in which the temperature-change sensing substrate according to the above aspect is laminated on a transparent substrate.

Specifically, for example, the temperature sensor may be one in which the temperature-change sensing substrate according to the aspect is laminated on a transparent substrate such as a transparent polymer film.

The type of the transparent polymer film is not limited as long as it is transparent, and for example, a polyester film such as polyethylene terephthalate may be used.

Hereinafter, the present invention will be described in more detail on the basis of Examples and Comparative Examples. However, the following Examples and Comparative Examples are only examples for describing the present invention in more detail, and the present invention is not limited by the following Examples and Comparative Examples.

### [Measurement method of physical properties]

### 1. Measurement of light transmittance

Using a UV-VIS spectrophotometer (UV-2600, Shimadzu Co.), light transmittance (T%) was measured in a green light (λ=560 nm) light source (slit size=2 mm) at 3 hour intervals.

For freezing-dedicated products, the transmittance was measured after being maintained for 24 hours at freezing temperature (-20°C), refrigeration temperature (5°C), and room temperature (20°C), respectively.

For refrigerating-dedicated products, the transmittance was measured after being maintained for 24 hours at refrigeration temperature (0°C) and room temperature (20°C), respectively.

In addition, in order to reproduce the recognition with naked eyes of real users of microfiber-based web-film, after attaching a warning mark (with an exclamation mark, "!" ) to the back of the manufactured microfiber-based web-film, the mark revealed due to a transparency process was photographed at 3 hour intervals using a CMOS digital camera (RX100M4, SONY Co.) under the same shutter speed (1/60 sec) and an aperture value (F6.3).

### 2. Measurement of glass transition temperature (dynamic mechanical analysis (DMA))

After fixing a web-film having a length of 20 mm, a width of 5 mm, and a thickness of 0.1 mm using a clamp and a drive shaft, phase lag (tan d) values of modulus, storage modulus (E' ), and loss modulus (E" ) of the material were obtained by applying a deformation in the form of sinusoidal vibration under the condition of a rising rate of 2°C/min at a temperature range of -60 to 60°C.

### [Preparation Example 1]

Polytetramethylene ether glycol (PTMEG, 20.0 mmol, number average molecular weight: 1,000 g/mol, Aldrich Corporation) was added to a two-necked separable flask equipped with a mechanical stirrer, and then dried under vacuum to remove moisture. Then, isophorone diisocyanate (42.0 mmol) and dibutyltin dilaurate (70 mg) in 8 ml of dimethylacetamide were slowly added dropwise at 70°C, followed by stirring under a nitrogen atmosphere for 2 hours.

Next, after cooling down to a temperature of 30°C, bis(4-hydroxyphenyl) disulfide (20.0 mmol) in 15 ml of DMAc was added dropwise, stirred at 40°C for 1.5 hours, and 29 ml of DMAc was additionally added dropwise to obtain a solution having a solid content of 40 wt%. The synthesized polymer showed a glass transition temperature of -8°C measured by DMA.

### [Preparation Example 2]

Preparation Example 2 was carried out in the same manner as in Preparation Example 1, except that in Preparation Example 1, poly(hexamethylene carbonate)diol (20.0 mmol, number average molecular weight: 1,000 g/mol, Dongsung Corporation) was added instead of polytetramethylene ether glycol (PTMEG, 20.0 mmol, number average molecular weight: 1,000 g/mol). The synthesized polymer showed a glass transition temperature of 7°C measured by DMA.

### [Example 1]

The polyurethane resin obtained in Preparation Example 1 was dissolved in a complex solvent composed of DMAc and tetrahydrofuran (THF) at a concentration of 20 wt%. The complex solvent was prepared with DMAc:THF = 3:7.

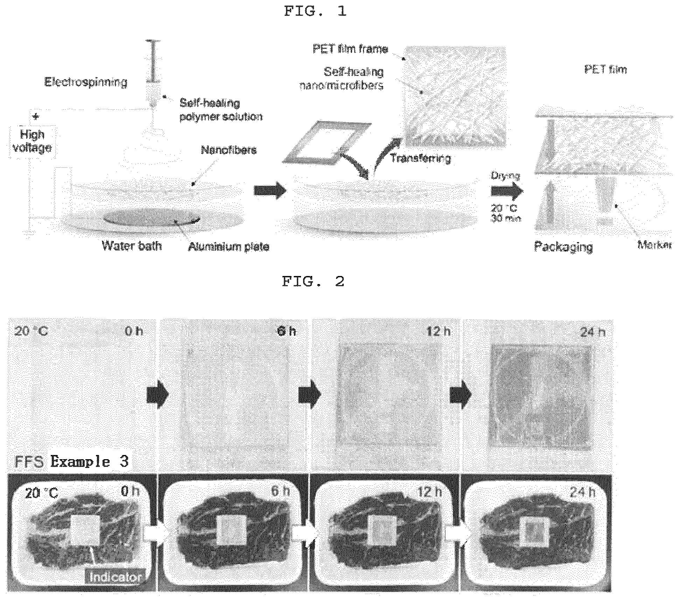

The prepared solution was filled in a cylinder, and then a voltage of 6.5 kV was applied to the polymer solution using a high voltage generator to be radiated for 2 minutes and 30 seconds. Here, a spinning nozzle was 24 gauge (0.31 mm), a discharge rate of the solution was 1 mL/h, and a distance from the nozzle to the metal collector was 15 cm. As shown in FIG. 1, a coagulation bath filled with distilled or tap water is placed under the spinning nozzle to collect the microfiber-based web-film from which impurities such as residual solvent and dust have been removed (average fiber diameter: 0.5 µm to 20 µm).

The microfiber-based web-film collected on the upper portion of the coagulation bath was taken as a square frame with outer and inner side lengths of 5 and 3 cm, respectively, and dried at room temperature (20°C) for about 30 minutes to manufacture a web-film having a thickness of 6.4 µm, as listed in Table 1 below. Then, a polyethylene terephthalate (PET) film (SKC) for protecting the microfiber-based web-film was attached to the upper and lower portions of the web-film, and light transmittance (%) was measured by using a UV-VIS spectrophotometer (UV-2600, Shimadzu Co.). The measurement results are listed in Table 1.

### [Example 2]

Example 2 was carried out in the same manner as in Example 1 except that the spinning time was 5 minutes. The results are listed in Table 1.

### [Example 3]

Example 3 was carried out in the same manner as in Example 1 except that the spinning time was 10 minutes. The results are listed in Table 1.

### [Example 4]

Example 4 was carried out in the same manner as in Example 1 except that the spinning time was 20 minutes. The results are listed in Table 1.

### [Example 5]

Example 5 was carried out in the same manner as in Example 1 except that the polyurethane resin obtained in Preparation Example 2 was dissolved in a complex solvent composed of DMAc and THF at a concentration of 32 wt%, and the polyurethane resin was spun at an applied voltage of 6.8 kV for 2 minutes and 30 seconds (average fiber diameter: 0.05 µm to 10 µm). The results are listed in Table 2.

### [Example 6]

Example 6 was carried out in the same manner as in Example 5 except that the spinning time was 5 minutes. The results are listed in Table 2.

### [Example 7]

Example 7 was carried out in the same manner as in Example 5 except that the spinning time was 10 minutes. The results are listed in Table 2.

### [Example 8]

Example 8 was carried out in the same manner as in Example 5 except that the spinning time was 20 minutes. The results are listed in Table 2.

### [Example 9]

After filling a hopper with the polyurethane resin obtained in Preparation Example 1, the polyurethane melt was spun through a melt-blown spinning nozzle. Here, a hot air temperature was 250°C, a hot air pressure was 24 psi, a nozzle temperature was 170°C, and a distance from the nozzle to a conveyor belt to which the mesh collector is attached was 25 cm. The microfiber-based web-film was collected while the conveyor belt speed was maintained at 60 cm/min (average fiber diameter: 10 µm to 200 µm).

The microfiber-based web-film collected on the mesh collector was taken as a square frame with outer and inner side lengths of 5 and 3 cm, respectively, then, a PET film (SKC) for protecting the microfiber-based web-film was attached to the upper and lower portions of the web-film, and light transmittance (%) was measured by using a UV-VIS spectrophotometer (UV-2600, Shimadzu Co.). The measurement results are listed in Table 3.

### [Example 10]

Example 10 was carried out in the same manner as in Example 9, except that the polyurethane resin obtained in Preparation Example 2 was used. The results are listed in Table 4 (an average fiber diameter: 10 µm to 100 µm).

**[Table 1]**

| Freezing-dedicated sensor | Web-film thickness (µm) | Light transmittance (%) | | |
|---|---|---|---|---|
| | | -20°C | 5°C (24 hours exposure) | 20°C (24 hours exposure) |
| Example 1 | 6.4 | 8.1 | 13.6 | 22.2 |
| Example 2 | 9.5 | 1.6 | 7.3 | 16.4 |
| Example 3 | 15.5 | 0.5 | 6.1 | 19.0 |
| Example 4 | 20.8 | 0.3 | 5.9 | 19.2 |

**[Table 2]**

| Refrigeratin g-dedicated sensor | Web-film thickness (µm) | Light transmittance (%) | |
|---|---|---|---|
| | | 0°C | 20°C (24 hours exposure) |
| Example 5 | 9.3 | 4.2 | 18.0 |
| Example 6 | 17.1 | 0.5 | 16.8 |
| Example 7 | 25.0 | 0.3 | 18.2 |
| Example 8 | 38.6 | 0.2 | 21.5 |

**[Table 3]**

| Freezing-dedicated sensor | Web-film thickness (µm) | Light transmittance (%) | | |
|---|---|---|---|---|
| | | -20°C | 5°C (24 hours exposure) | 20°C(24 hours exposure) |
| Example 9 | 84.3 | 0.1 | 8.7 | 26.3 |

**[Table 4]**

| Refrigeratin g-dedicated sensor | Web-film **thickness** (µm) | Light transmittance (%) | |
|---|---|---|---|
| | | 0°C | 20°C (24 hours exposure) |
| Example 10 | 103.1 | 0.1 | 27.8 |

It can be confirmed from Tables 1 and 2 that the web-film manufactured from the microfibers according to the present invention had a high transmittance increased as the microfibers fused under a certain temperature conditions to become a uniform film, and the longer the spinning time, the greater the change in transmittance.

It can be confirmed from Tables 3 and 4 that the microfiber web-film manufactured by the melt spinning process also had effective change in transmittance under certain temperature conditions.

As shown in FIG. 2, it was confirmed that the change in transmittance visible to the naked eye of the microfiber-based web-film manufactured according to an embodiment of the present invention was effective, which suggests that it can be applied as a temperature-change sensor to prevent spoilage of refrigerated or frozen food and medical supplies.

Hereinabove, although the present invention has been described by specific matters, the limited embodiments, and drawings, they have been provided only for assisting in a more general understanding of the present invention. Therefore, the present invention is not limited to the exemplary embodiments. Various modifications and changes may be made by those skilled in the art to which the present invention pertains from this description.

Therefore, the spirit of the present invention should not be limited to the above-mentioned embodiments, but the claims and all of the modifications equal or equivalent to the claims are intended to fall within the scope and spirit of the present invention.

## Claims

1. A temperature-change sensing substrate having a self-healing polyurethane polymer matrix and pores dispersed in the matrix,
wherein a change in light transmittance occurs while sizes of the pores are changed due to diffusion of the self-healing polyurethane polymer forming the matrix by a change in temperature, such that the change in temperature is sensed.

2. The temperature-change sensing substrate of claim 1, wherein the pores are selected from through-holes and irregularities.

3. The temperature-change sensing substrate of claim 1, wherein the temperature-change sensing substrate has a change in light transmittance while the size of the pores decreases or pores disappears as the temperature rises.

4. The temperature-change sensing substrate of claim 1, wherein the temperature-change sensing substrate has an onset point temperature at which the self-healing polyurethane polymer starts to self-fuse, and irreversibly self-fuses at the onset point temperature to increase transparency.

5. The temperature-change sensing substrate of claim 4, wherein when the temperature-change sensing substrate is maintained at -20°C for 24 hours, and then the light transmittance measured at a wavelength of 380 to 780 nm is referred to as TT₁, and when the temperature-change sensing substrate is maintained at 20°C for 24 hours, and then the light transmittance measured at a wavelength of 380 to 780 nm is referred to as TT₂, |TT₂ - TT₁| ≥ 5%.

6. The temperature-change sensing substrate of claim 5, wherein the temperature-change sensing substrate has a light transmittance of 15% or more measured at a wavelength of 380 to 780 nm after being maintained at 20°C for 24 hours.

7. The temperature-change sensing substrate of claim 1, wherein the temperature-change sensing substrate is:
a) a web-film in which microfibers made of a self-healing polyurethane polymer form network structures, and through-holes are formed in the network structures, or
b) a sheet or film made of a self-healing polyurethane polymer, and has a plurality of through-holes or irregularities.

8. The temperature-change sensing substrate of claim 7, wherein the microfibers have an average diameter of 0.01 µm to 200 µm.

9. The temperature-change sensing substrate of claim 7, wherein the microfibers are manufactured by electrospinning, solution spinning, or melt spinning.

10. The temperature-change sensing substrate of claim 7, wherein the size of the through-hole is 0.01 µm to 200 µm.

11. The temperature-change sensing substrate of claim 1, wherein the self-healing polyurethane polymer includes a disulfide structure.

12. The temperature-change sensing substrate of claim 1, wherein the temperature-change sensing substrate has a thickness of 1 µm to 500 µm.

13. A temperature sensor comprising the temperature-change sensing substrate of any one of claims 1 to 12.

14. A packaging material comprising the temperature sensor of claim 13.
